# EUROPÄISCHE PATENTSCHRIFT

(11) **EP 0 264 053 B1**
(45) Veröffentlichungstag und Bekanntmachung des Hinweises auf die Patenterteilung: **12.01.1994**
(21) Anmeldenummer: 87114564.5
(22) Anmeldetag: 06.10.1987
(51) Int. Cl.: H04H 1/00, H04Q 9/00, H04N 7/08

(54) **Rundfunkempfangsanlage**
Broadcast receiving arrangement
Dispositif récepteur de radiodiffusion

(30) Priorität: 11.10.1986 DE 3634752
(43) Veröffentlichungstag der Anmeldung: 20.04.1988
(73) Patentinhaber: Deutsche Thomson-Brandt GmbH, 78003 Villingen-Schwenningen (DE)
(72) Erfinder: Wippermann, Horst, Dipl.-Ing., D-3017 Pattensen (DE)

(56) Entgegenhaltungen:
- EP-A- 0 112 589
- DE-A- 2 400 889
- MACHINE DESIGN, Band 55, Nr. 24, Oktober 1983, Seiten 109-112, Cleveland, Ohio, US; F.W. GUTZWILLER: "Control networks for the home"

## Beschreibung

Die Erfindung betrifft eine Rundfunkempfangsanlage nach dem Oberbegriff des Anspruchs 1.

Rundfunkempfangsanlagen für den Empfang von Fernseh- und/oder Hörrundfunksendungen über drahtlose Ausstrahlung oder über Kabel enthalten im allgemeinen ein Empfangsgerät, häufig auch zusätzlich einen Video- und/oder Audio-Recorder.

Bei derartigen Anlagen, insbesondere bei Vorhandensein von Audio- und/oder Videorecordern und Abwesenheit einer geeigneten Bedienungsperson, aber auch generell bei Anwesenheit des Benutzers solcher Anlagen, besteht der Wunsch, bestimmte, ausgewählte Sendebeiträge zu empfangen und/oder aufzuzeichnen. Hierzu ist es bekannt, den betreffenden Recorder bzw. das betreffende Empfangsgerät mit einer Schaltuhr, einem sogenannten Timer, zu versehen, der den Recorder bzw. das Empfangsgerät zu einem bestimmten Zeitpunkt und für eine bestimmte Zeitdauer, ggf. mit gleichzeitigem Abstimmen auf einen bestimmten Empfangskanal, einschaltet. Diese Lösung hat den Nachteil, daß bei verspätet beginnenden Sendebeiträgen ein unnützer Aufnahmebetrieb läuft oder das eingelegte Magnetband am Ende nicht ausreicht bzw. unerwünschte Sendebeiträge angesehen und/oder -gehört werden und dadurch dem Benutzer im allgemeinen wertvolle Zeit verlorengeht.

Diese Nachteile können durch das bereits in Deutschland kürzlich eingeführte Video-Programm-System (VPS) vermieden werden (s. zum Beispiel EP-A-112 598). Für Hörfunksendungen sind vergleichbare Verfahren unter der Bezeichnung Radio-Daten-Service (RDS) bekannt. Dabei wird in beiden Fällen zu jedem Sendebeitrag ein diesen Sendebeitrag charakterisierendes Kennsignal übertragen, das sogenannte VPS- bzw. RDS-Signal, das auf der Empfangsseite mit einer vom Benutzer programmierten Kennung verglichen wird.

Bei Übereinstimmung wird eine Schaltspannung erzeugt, die dadurch genau zum tatsächlichen Start-Zeitpunkt des Sendebeitrages das Empfangsgerät genau für die tatsächliche Zeitdauer des Sendebeitrages einschaltet. Das ist sehr vorteilhaft. Wenn der gewünschte Sendebeitrag beispielsweise um 20.00 Uhr beginnen soll, sich jedoch aus aktuellem Anlaß verschiebt, wird auch das Einschalten des Empfangsgerätes für den gewünschten Sendebeitrag entsprechend verzögert. Beginnt dann schließlich um 20.30 Uhr die ursprünglich für 20.00 Uhr vorgesehene Sendung, so wird diese dann genau während ihrer tatsächlichen Zeitdauer empfangen und/oder aufgezeichnet.

Der Erfindung liegt die Aufgabe zugrunde, dem Benutzer einer Rundfunkempfangsanlage der eingangs geschilderten Art ein beachtliches Maß an Komfort und Service zu bieten.

Diese Aufgabe wird durch die im Anspruch 1 beschriebene Erfindung gelöst. Vorteilhafte Weiterbildungen der Erfindung sind in den Unteransprüchen beschrieben.

Die Erfindung beruht auf folgender Überlegung. Das erwähnte Kennsignal ist dem jeweiligen Sendestandard entsprechend ein Signal, das genau während der Dauer desjenigen Sendebeitrages erscheint, dem es zugeordnet ist. Durch das RDS- bzw. VPS-Signal ist es also grundsätzlich ermöglicht, während der Dauer des Sendebeitrages einen Verbraucher sender- bzw. beitragsgesteuert automatisch aus- oder einzuschalten oder sonstige Fernwirksteuerungen vorzunehmen.

Diese Möglichkeit wird erfindungsgmäß vorteilhaft dazu genutzt, während eines bestimmten Sendebeitrages zusätzliche Verbraucher ein- oder auszuschalten oder zu steuern, die mit dem Rundfunkempfang, insbesondere der Bildbetrachtung oder dem Hörgenuß, in einem mehr oder weniger engen Zusammenhang stehen. Das Ein- oder Ausschalten der Verbraucher dient z.B. der Sicherheit, der Bequemlichkeit, der Stromersparnis, der Ausschaltung auch nicht-technischer, insbesondere unerwünschter Störungen.

Mit einer empfängerseitig aus dem RDS- bzw. VPS-Kennsignal abgeleiteten Schaltspannung können vorzugsweise folgende Schaltfunktionen ausgeführt werden: Ein- oder Ausschalten einer speziellen Fernsehleuchte, eines elektronischen Babysitters, einer Diebstahlsicherung, einer Servo-Hausbar, einer zusätzlichen Heizung, einer optischen Alarmanlage oder Türklingel oder Öffnen einer den Bildschirm verdeckenden oder Öffnen oder Schließen einer der Abdunkelung des beim Betrieb der Empfangsanlage benutzten Raumes dienenden Abdekkung wie z.B. einer Tür, Jalousie, Vorhang oder Klappe, Abschalten der im allgemeinen zu hellen Zimmerbeleuchtung oder Abschwächen derselben, der Haustürklingel, störender Audio- oder Videogeräte, Herabsetzen der Lautstärke einer Telefonklingel.

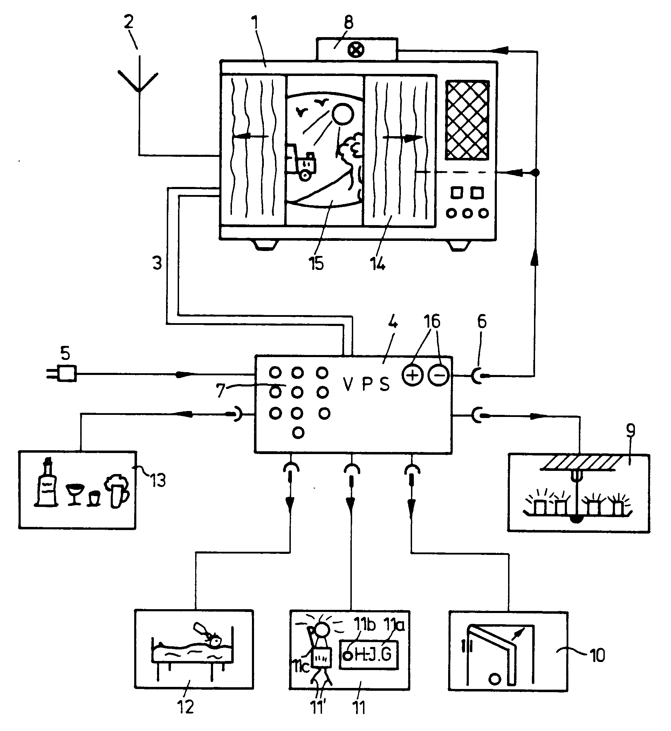

Weitere Vorteile, Merkmale und Einzelheiten der Erfindung werden im folgenden an einem bevorzugten Ausführungsbeispiel anhand der Zeichnung erläutert.

In der Figur ist an ein handelsübliches Fernsehempfangsgerät 1 eine Antenne 2 angeschlossen. Das Fernsehempfangsgerät 1 ist über einen Datenbus 3 mit einem VPS-Steuergerät 4 verbunden. Das Steuergerät 4 ist über einen Netzstecker 5 an eine nicht dargestellte Spannungsquelle angeschlossen und mit einer Vielzahl von Anschlüssen 6 versehen An die Anschlüsse 6 ist eine Reihe unterschiedlicher Verbraucher angeschlossen.

Die Wirkungsweise ist folgende: Mit einer Eingabe-Tastatur 7 des Steuergerätes 4 sind die Kennwerte eines gewünschten Sendebeitrages programmierbar. Das Steuergerät 4 empfängt die gesendeten und im Fernsehempfangsgerät 1 empfangenen VPS-Kennsignale über den Datenbus 3 oder auch über eine nicht dargestellte getrennte Antenne und Eingangsstufe. Wenn der Sendebeitrag, dessen Kennung in die Tastatur 7 eingegeben wurde, empfangen wird, wird das Fernsehempfangsgerät 1 oder auch ein Videorecorder eingeschaltet. Gleichzeitig wird jeweils für die Dauer dieses Sendebeitrages eine Versorgungsspannung an den Anschlüssen 6 eingeschaltet oder auch ausgeschaltet.

Im dargestellten Beispiel wird für die Dauer des Sendebeitrages mit einer aus dem VPS-Kennsignal gewonnenen Schaltspannung eine der Schonung der Augen des Fernsehzuschauers dienende Fernsehleuchte 8 eingeschaltet, eine im allgemeinen für Fernsehzwecke zu helle Zimmerbeleuchtung 9 abgeschaltet, eine Einbruchssicherung 10 zum Schließen aller wesentlichen Türen und Eingänge betätigt, eine Haustürklingelanlage 11 zur Vermeidung von Störungen abgeschaltet, beispielsweise eine abgebrochen dargestellte Klingelleitung 11ʹ zwischen einem an einem Klingeltastengehäuse 11a vorgesehenen Schalttaster 11b und einer Haustürklingel 11c unterbrochen, ein symbolisch dargestellter elektronischer Babysitter 12 zur Abgabe akustischer oder optischer Warnsignale eingeschaltet und insbesondere eine bei weitem nur unvollständig dargestellte Servo-Hausbar 13 aktiviert, d.h. elektromechanisch geöffnet, beleuchtet und an den Benutzer herangefahren. Gleichzeitig mit der Fernsehleuchte 8 wird ein Antrieb für einen vor dem Bildschirm 15 des Fernsehempfangsgerätes 1 befindlichen Vorhang 14 eingeschaltet, so daß der an sich durch den Vorhang 14 verdeckte Bildschirm 15 für die Dauer des Sendebeitrages freigegeben wird. Gleichzeitig werden zusätzlich mittels eines snap-in/snap-out-Mechanismus am Gehäuse des Fernsehempfangsgerätes 1 befestigte Lautsprecher zum Erhöhen der Stereobasis seitlich teleskopartig ausgefahren.

Die an das Steuergerät 4 angeschlossenen Verbraucher werden somit je nach ihrer Eigenart während der Dauer des Sendebeitrages ein- oder ausgeschaltet. Deshalb ist jedem Anschluß 6 ein Umschalter 16 mit zwei Tasten "+" bzw. "-" zugeordnet. Wurde die Taste "+" betätigt, wird während des Sendebeitrages der an den betreffenden Anschluß 6 angeschlossene Verbraucher eingeschaltet. Wurde die Taste "-" betätigt, wird der an den betreffenden Anschluß 6 angeschlossene Verbraucher während des Sendebeitrages abgeschaltet.

Das Steuergerät 4 kann auch in dem Fernsehempfänger 1 oder in einem Recorder enthalten sein. Es kann auch als getrenntes Zusatzgerät ausgebildet sein, das mit dem Netz, mit dem Empfangsgerät und den durch das RDS- bzw. VPS-Signal gesteuerten Verbrauchern verbindbar ist.

## Patentansprüche

1. Rundfunkempfangsanlage, insbesondere Hörfunk- und/oder Fernsehempfangsanlage, mit einer Einrichtung zum senderseitig gesteuerten Betätigen eines empfängerseitigen Gerätes durch ein während der gesamten Dauer eines Sendebeitrages übertragenes, diesen Sendebeitrag charakterisierendes Kennsignal, dadurch gekennzeichnet, daß die Rundfunkempfangsanlage so ausgebildet ist, daß das Kennsignal zum Steuern von Verbrauchern (8 - 13) dient, die nicht zur unmittelbaren Rundfunkempfangsschaltung zählen, wobei der Anlage ein Steuergerät (4) zugeordnet ist, das einen Netzanschluß (5), einen Anschluß (6) für ein Rundfunkempfangsgerät (1), eine Tastatur (7) zum Programmieren eines gewünschten Sendebeitrages und Anschlüsse (6) für die Verbraucher (8 - 13) aufweist.

2. Anlage nach Anspruch 1, dadurch gekennzeichnet, daß den Anschlüssen (6) für die Verbraucher (8 - 13) je ein Umschalter (16) zugeordnet ist, durch dessen Betätigung (Tasten "+" bzw. "-") der angeschlossene jeweilige Verbraucher (8 - 13) durch das Kennsignal wahlweise einbzw. ausschaltbar ist.

3. Anlage nach Anspruch 1, dadurch gekennzeichnet, daß das Kennsignal zum Steuern von elektrischen, mechanischen, pneumatischen oder hydro-pneumatischen Verbrauchern (8 - 13) dient.

4. Anlage nach Anspruch 1 oder 2, dadurch gekennzeichnet, daß das Kennsignal zum Ein- oder Ausschalten von Beleuchtungskörpern (8, 9) oder zum vorbestimmten Verändern deren Helligkeit oder Farbe dient.

5. Anlage nach Anspruch 1 oder 2, dadurch gekennzeichnet, daß das Kennsignal zum Einschalten von Überwachungs- und Sicherungsgeräten wie elektronischem Babysitter (12) oder Einbruchsicherungen (10) dient.

6. Anlage nach Anspruch 1 oder 2, dadurch gekennzeichnet, daß das Kennsignal zum Abschalten von beim Fernsehempfang möglicherweise störenden Verbrauchern wie Haustürklingelanlage (11), Telefon, Audiogeräten dient.

7. Anlage nach Anspruch 1 oder 2, dadurch gekennzeichnet, daß das Kennsignal zum vorbestimmten Steuern von der Bequemlichkeit dienenden Verbrauchern wie Servo-Hausbar (13), Heizungsanlage, Hilfsmitteln für Schwerbehinderte dient.

8. Anlage nach Anspruch 1 oder 2, dadurch gekennzeichnet, daß das Kennsignal zur öffnung einer den Bildschirm (15) eines Fernsehempfangsgerätes (1) verdeckenden Abdeckung wie Tür, Jalousie, Vorhang (14) oder Klappe dient.

9. Anlage nach Anspruch 1 oder 2, dadurch gekennzeichnet, daß das Steuergerät (4) in ein Rundfunkempfangsgerät, einen Audio- oder einen Videorecorder eingebaut ist.

10. Steuergerät für eine Anlage nach Anspruch 1 oder 2, dadurch gekennzeichnet, daß das Steuergerät (4) als Zusatzgerät ausgebildet ist.

## Claims

1. A broadcast receiving system, in particular a radio-and/or television receiving system, with a device for the operation, controlled at the transmitting end, of a device at the receiving end by means of a code signal which is transmitted for the entire duration of a broadcast and is characteristic of this broadcast, characterised in that the broadcast receiving system is designed such that the code signal serves to control consumer devices (8 - 13) which do not form part of the immediate broadcast receiving circuit, where the system is assigned a control device (4) which comprises a mains terminal (5), a terminal (6) for a broadcast receiving device (1), a keyboard (7) for programming a desired broadcast, and terminals (6) for the consumer devices (8 - 13).

2. A system as claimed in Claim 1, characterised in that the terminals (6) for the consumer devices (8 - 13) are each assigned a change-over switch (16), by the actuation of which (keys "+" or "-") the respective connected consumer device (8 - 13) can selectively be switched on or off by the code signal.

3. A system as claimed in Claim 1, characterised in that the code signal serves to control electrical, mechanical, pneumatic or hydro-pneumatic consumer devices (8 - 13).

4. A system as claimed in Claim 1 or 2, characterised in that the code signal serves to switch on or off lighting units (8, 9) or to change their brightness or colour in a predetermined fashion.

5. A system as claimed in Claim 1 or 2, characterised in that the code signal serves to switch on monitoring- and security devices, such as an electronic babysitter (12) or burglar alarms (10).

6. A system as claimed in Claim 1 or 2, characterised in that the code signal serves to switch off consumer devices which may disturb the television reception, such as front door bell system (11), telephone, audio equipment.

7. A system as claimed in Claim 1 or 2, characterised in that the code signal serves to control, in a predetermined fashion, convenience consumer devices, such as servo-bar (13), heating system, facilities for the severely handicapped.

8. A system as claimed in Claim 1 or 2, characterised in that the code signal serves to open a cover concealing the screen (15) of a television receiver (1), such as a door, blind, curtain (14) or shutter.

9. A system as claimed in Claim 1 or 2, characterised in that the control device (4) is installed in a broadcast receiving device, an audio- or a video recorder.

10. A control device for a system as claimed in Claim 1 or 2, characterised in that the control device (4) has the form of an accessory device.

## Revendications

1. Dispositif récepteur de radiodiffusion, en particulier dispositif récepteur de radiodiffusion et/ou de télévision, avec un dispositif pour actionner de manière commandée côté émetteur un appareil côté récepteur par un signal d'identification transmis pendant toute la durée d'une émission qui caractérise cette émission, **caractérisé en ce** que le dispositif récepteur de radiodiffusion est configuré de telle manière que le signal d'identification sert à commander des consommateurs (8 - 13) qui ne font pas partie du circuit immédiat de réception de radiodiffusion, un appareil de commande (4) étant affecté au dispositif qui présente un raccord au secteur (5), un raccord (6) pour un appareil récepteur de radiodiffusion (1), un clavier (7) pour programmer une émission souhaitée et des raccords (6) pour les consommateurs (8 - 13).

2. Dispositif selon la revendication 1, **caractérisé en ce** qu'un commutateur inverseur (16) est affecté respectivement à chaque raccord (6) pour les consommateurs (8 - 13), par l'actionnement duquel (touches "+" ou *-") le consommateur respectivement raccordé peut être au choix mis en marche ou arrêté par le signal d'identification.

3. Dispositif selon la revendication 1, **caractérisé en ce** que le signal d'identification sert à commander des consommateurs électriques, mécaniques, pneumatiques ou hydro-pneumatiques (8 - 13).

4. Dispositif selon la revendication 1 ou 2, **caractérisé en ce** que le signal d'identification sert à mettre en marche ou à arrêter des appareils d'éclairage (8, 9) ou à varier de manière prédéterminée leur luminosité ou leur couleur.

5. Dispositif selon la revendication 1 ou 2, **caractérisé en ce** que le signal d'identification sert à mettre en marche des appareils de surveillance et de sécurité, comme des babysitters électroniques (12) ou des dispositifs anti-cambriolage (10).

6. Dispositif selon la revendication 1 ou 2, **caractérisé en ce** que le signal d'identification sert à arrêter des consommateurs qui peuvent gêner lors de la réception de télévision, comme une installation de sonnerie de porte d'entrée (11), le téléphone, des appareils son.

7. Dispositif selon la revendication 1 ou 2, **caractérisé en ce** que le signal d'identification sert à commander de manière prédéterminée des consommateurs qui servent à la commodité, comme un bar privé servocommandé (13), une installation de chauffage, des auxiliaires pour handicapés.

8. Dispositif selon la revendication 1 ou 2, **caractérisé en ce** que le signal d'identification sert à ouvrir un recouvrement, comme une porte, un store, un rideau (14) ou un volet, qui couvre l'écran (15) d'un appareil récepteur de télévision (1).

9. Dispositif selon la revendication 1 ou 2, **caractérisé en ce** que l'appareil de commande (4) est intégré dans un appareil récepteur de radiodiffusion, un enregistreur son ou un magnétoscope.

10. Appareil de commande pour un dispositif selon la revendication 1 ou 2, **caractérisé en ce** que l'appareil de commande (4) est configuré comme un appareil supplémentaire.
